(19) Europäisches Patentamt / European Patent Office / Office européen des brevets

(11) **EP 2 039 506 A1**

(12) **EUROPEAN PATENT APPLICATION**
published in accordance with Art. 153(4) EPC

(43) Date of publication:
**25.03.2009 Bulletin 2009/13**

(51) Int Cl.:
*B32B 27/00* (2006.01)    *B32B 27/28* (2006.01)
*C09J 5/08* (2006.01)     *C09J 7/00* (2006.01)
*C09J 7/02* (2006.01)     *C09J 133/00* (2006.01)

(21) Application number: **07767894.4**

(22) Date of filing: **29.06.2007**

(86) International application number:
**PCT/JP2007/063107**

(87) International publication number:
**WO 2008/004503 (10.01.2008 Gazette 2008/02)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **06.07.2006 JP 2006186609**

(71) Applicant: **NITTO DENKO CORPORATION**
**Ibaraki-shi,**
**Osaka 567-8680 (JP)**

(72) Inventors:
• **MUTA, Shigeki**
  **Ibaraki-shi**
  **Osaka 567-8680 (JP)**
• **ANDO, Masahiko**
  **Ibaraki-shi**
  **Osaka 567-8680 (JP)**

(74) Representative: **Grünecker, Kinkeldey,**
**Stockmair & Schwanhäusser**
**Anwaltssozietät**
**Leopoldstrasse 4**
**80802 München (DE)**

(54) **RELEASE LINERS, PRESSURE-SENSITIVE ADHESIVE TAPE, AND PRESSURE-SENSITIVE ADHESIVE TAPE ROLL**

(57) A first release liner of the present invention comprises a single- or multilayered film having a releasable layer in which the peel strength in application to an acrylic plate (23 DEG C) is 0.02-0.5 N/20 mm. Also provided is a second release liner which comprises a single- or multilayered film having a releasable layer comprising an ethylene/vinyl acetate resin. The release liners each may be a multilayered film composed of a substrate and a releasable layer. When each of the release liners is used as a release liner in winding a pressure-sensitive adhesive tape on a bobbin, the tape winding operation is free from troubles that the release liner undesirably peels off, tape shifting occurs, and air inclusion occurs between tape layers. When the pressure-sensitive adhesive tape is used, the release liner can be easily peeled from the pressure-sensitive adhesive layer.

Fig.2

**Description**

Technical Field

The present invention relates to a release liner, and a pressure-sensitive adhesive tape and a pressure-sensitive adhesive tape roll produced by using the release liner.

Background Art

Pressure-sensitive adhesive tapes having a thick pressure-sensitive adhesive layer, such as bubble-containing pressure-sensitive adhesive tapes, have been used as pressure-sensitive adhesive tapes for application to and adherend having curved or irregular surface. Such a pressure-sensitive adhesive tape is often distributed as a pressure-sensitive adhesive tape roll as it is wound around bobbin in the state where a release liner (separator) is bonded temporarily to one or both faces of the pressure-sensitive adhesive layer. Known methods of winding such a pressure-sensitive adhesive tape around bobbin include record-disc winding in which the pressure-sensitive adhesive tape is wound around bobbin concentrically (in the donut shape) at the same position and bobbin winding in which the pressure-sensitive adhesive tape is wound around bobbin as the tape is traversed in the width direction into a spiral shape. The pressure-sensitive adhesive tape having a thick pressure-sensitive adhesive layer such as bubble-containing pressure-sensitive adhesive tape has a restricted winding length (winding meter) when wound by record-disc winding, and thus, bobbin winding is often employed.

The pressure-sensitive adhesive tape roll prepared by the bobbin winding has a problem that the pressure-sensitive adhesive layer often extends out of the edge of the release liner due to pressure by, for example, tape-winding tension, which causes tape-blocking. Thus, proposed was a method of preventing the blocking of the pressure-sensitive adhesive layer lateral areas (side faces) between neighboring tapes by making the width of the release liner larger than that of the main pressure-sensitive adhesive tape (pressure-sensitive adhesive layer). Alternatively, Japanese Unexamined Utility Model Application Publication No. 63-199147 proposes a pressure-sensitive adhesive tape having a pressure-sensitive adhesive layer on both faces of a substrate except the both lateral terminal areas of the substrate in the width direction and a separator temporarily bonded to the pressure-sensitive adhesive layer on one side of substrate.

Patent Document 1: Japanese Unexamined Utility Model Application Publication No. 63-199147

Disclosure of the Invention

Technical Problems to be Solved

The release liners carrying a release-finished layer on the surface and films of a fluorine-based or non-polar polymer are generally used as the release liners for pressure-sensitive adhesive tape roll. However, conventional release liners have problems regarding the pressure-sensitive adhesive tape rolls with bobbin winding: they are separated unexpectedly for example during tape winding because it is too slippery; the wound tape is dislocated in the width direction (right and left) ; and there is incorporation of air into the space between pressure-sensitive adhesive tapes when the pressure-sensitive adhesive tape is wound and thereby it is difficult to obtain an tightly and uniformly wound pressure-sensitive adhesive tape roll favorable in appearance, particularly when the width of the release liner is made larger than that of the pressure-sensitive adhesive tape body (pressure-sensitive adhesive layer) for prevention of blocking in the pressure-sensitive adhesive layer lateral area because the release face of the region of the release liner extending out of the main pressure-sensitive adhesive tape (pressure-sensitive adhesive layer) comes to contact with the rear face of the release liner of neighboring pressure-sensitive adhesive tape.

An object of the present invention is to provide a release liner that is resistant, when used as a release liner of a pressure-sensitive adhesive tape roll with bobbin winding, to unexpected separation, dislocation of the tape and incorporation of bubbles in the space between tapes for example during tape winding and yet easily separated from the pressure-sensitive adhesive layer during use of the pressure-sensitive adhesive tape, and a pressure-sensitive adhesive tape and a pressure-sensitive adhesive tape roll prepared by using the release liner.

Means to Solve the Problems

After intensive studies to achieve the object, the inventors have found that it is possible to obtain a pressure-sensitive adhesive tape roll that is resistant to dislocation of the pressure-sensitive adhesive tape and incorporation of air even when pressure-sensitive adhesive tape was wound around bobbin and favorable in appearance, by using a release liner containing a release layer having a peel strength in a particular range or a release liner having a release layer of a particular resin, and accomplished the present invention.

Thus, the present invention provides a release liner of single-layer or laminated film, containing a release layer having a peel strength to acrylic plate (23°C) of 0.02 N/20 mm to 0.5 N/20 mm (hereinafter, referred to also as "first release liner").

The present invention also provides a release liner of single-layer or laminated film having a release layer comprised of an ethylene-vinyl acetate resin (hereinafter, referred to also as "second release liner").

The each release liner above may be a laminated film having a substrate and one or more release layers.

The present invention further provides a pressure-sensitive adhesive tape, having each of the release liner above [first or second release liner (hereinafter, referred to generally as "release liner A")] temporarily bonded to one face of its pressure-sensitive adhesive layer.

In the pressure-sensitive adhesive tape, the pressure-sensitive adhesive layer is preferably made of an acrylic pressure-sensitive adhesive. The pressure-sensitive adhesive layer may be a bubble-containing pressure-sensitive adhesive layer. The width of the release liner A is preferably larger than that of the pressure-sensitive adhesive layer.

Moreover in the pressure-sensitive adhesive tape, an additional release liner (release liner B) may be bonded temporarily to the other face of the pressure-sensitive adhesive layer.

The present invention also provides a pressure-sensitive adhesive tape roll, prepared by winding the pressure-sensitive adhesive tape having the release liner B temporarily bonded to the other face of the pressure-sensitive adhesive layer, around bobbin in bobbin winding with the release liner B facing inward.

Effects of the Invention

The release liner according to the present invention, which is slightly adhesive or slightly pressure-sensitive adhesive on the release face, is resistant to unexpected separation during winding the pressure-sensitive adhesive tape into a bobbin roll. Also, especially when the width of the release liner is made larger than that of the pressure-sensitive adhesive tape body (pressure-sensitive adhesive layer) for prevention of blocking in the pressure-sensitive adhesive layer lateral areas, the release liner is improved in adhesiveness and protected from dislocation of the wound tape in the width direction (right or left) and incorporation of air between tapes, because the release face of the release liner in the region extending out of the pressure-sensitive adhesive tape body (pressure-sensitive adhesive layer) is adhered to the rear face of the release liner of neighboring pressure-sensitive adhesive tape by weak interaction. In this way, it is possible to obtain a pressure-sensitive adhesive tape roll superior in appearance in which the pressure-sensitive adhesive tape is wound tightly and uniformly around bobbin (in the desired winding shape). In addition, because the release face of the release liner is extremely weakly adhesive, it can be easily separated form the pressure-sensitive adhesive layer during use of the pressure-sensitive adhesive tape.

Brief Description of the Drawings

Figure 1 is a schematic crosssectional view illustrating an example of the pressure-sensitive adhesive tape according to the present invention.

Figure 2 is a view explaining the bobbin winding state of the pressure-sensitive adhesive tape in the pressure-sensitive adhesive tape roll according to the present invention.

Brief Description of Numerals

1 Substrate (substrate for release liner)
2 Release layer
3 Release liner (release liner A)
4 Pressure-sensitive adhesive layer
5 Release liner (release liner B)

Best Mode of Carrying Out the Ivention

[Release liner A]

The first release liner according to the present invention is made of a single-layer or a laminated film containing a weakly adhesive release layer having a peel strength to acrylic plate (23°C) of 0.02 N/20 mm to 0.5 N/20 mm. The peel strength to acrylic plate is determined by placing a release liner sample (20 mm in width) on an acrylic plate [trade name "Acrylite L" manufactured by Mitsubishi Rayon Co., Ltd.; synthetic resin plate of polymethyl methacrylate, colorless, plate thickness: 2 mm] with its release face (of the release layer) facing downward, pressing it with a 2 kg roller in reciprocating motion at a speed of 300 mm/min from above the sample for 30 minutes, folding the marginal region of the sample by an angle of 180°, peeling the sample at a speed of 300 mm/min, and measuring the force applied then by using a tensile testing machine under a temperature condition of 23°C (according to JIS Z0237).

The lowest peel strength to acrylic plate is preferably 0.03 N/20 mm, more preferably 0.04 N/20 mm, and the highest peel strength is preferably 0.3 N/20 mm, more preferably 0.2 N/20 mm. If the peel strength is less than 0.02 N/20 mm, because of excessively low adhesive strength of the release face, the tape may be separated unexpectedly for example during being wound, when the release liner is used on pressure-sensitive adhesive tape roll with bobbin winding. In particular when a release liner wider than a pressure-sensitive adhesive layer is used, the pressure-sensitive adhesive tape may be dislocated by slipping between the release face of the release liner and the rear face of the release liner of neighboring pressure-sensitive adhesive tape and bubbles are incorporated into the space between tapes. Thereby, a roll unfavorable in appearance is obtained. Alternatively when the peel strength to acrylic plate is more than 0.5 N/20 mm, the adhesive strength of the release face may become too big, causing troubles in unwinding the pressure-sensitive adhesive tape and leading to deterioration in processability due to the excessively high peeling resistance of the release liner during use of the pressure-sensitive adhesive tape.

Increase in the adhesiveness of the release face of the release liner at high temperature or increase thereof over time may lead to troubles in unwinding pressure-sensitive adhesive tape and deterioration in releasability of the release liner during use of the pressure-sensitive adhesive tape. For that reason, the release liner preferably has a peel strength to acrylic plate, as determined after storage at 50°C for 24 hours, in the range of 0.02 N/20 mm to 0.8 N/20 mm, particularly preferably in the range of 0.05 N/20 mm to 0.5 N/20 mm. The peel strength can be determined similarly to above, by pressing a release liner sample (20 mm in width) onto an acrylic plate with a roller, after storage at 50°C for 24 hours, folding the marginal region of the sample by an angle of 180°, peeling off the sample at a speed of approximately 300 mm/min and measuring the force applied then by a tensile testing machine.

If the release liner is made wider than the adhesive layer for prevention of adhesion between the lateral areas of pressure-sensitive adhesive layers, especially when it is wound around a bobbin, the release face preferably has a proper adhesiveness to its rear face, for prevention of slipping between the release face of the release liner and the rear face of the release liner of neighboring pressure-sensitive adhesive tape. For example, the peel strength of the release face of release liner to its rear face (23°C) (rear face of the release layer in the case of a single layer film only having a release layer, and rear face of the substrate in the case of a laminated film having a substrate and a release layer) is preferably in the range of 0.02 N/20 mm to 0.5 N/20 mm, more preferably in the range of 0.03 N/20 mm to 0.3 N/20 mm, and particularly preferably in the range of 0.04 N/20 mm to 0.2 N/20 mm. Alternatively, the peel strength of the release face of release liner to its rear face, as determined after storage at 50°C for 24 hours, is preferably in the range of 0.02 N/20 mm to 0.8 N/20 mm, particularly preferably in the range of 0.05 N/20 mm to 0.5 N/20 mm. The peel strength is determined in a similar manner to the peel strength to acrylic plate described above, except that the rear face of the release liner is used replacing the acrylic plate.

The release layer of the release liner is not particularly limited, as long as it is layer only weakly adhesive to the degree that the peel strength falls in the range above, and may be made of, for example, one or more resins. The resin can be selected according to the base polymer used in the pressure-sensitive adhesive layer of the pressure-sensitive adhesive tape. For example, if the pressure-sensitive adhesive in the pressure-sensitive adhesive tape is an acrylic pressure-sensitive adhesive, a release layer made of an ethylene copolymer such as ethylene-vinyl acetate resin has a suitable separability from the pressure-sensitive adhesive layer. When the release layer is made of an ethylene-vinyl acetate resin, the vinyl acetate content in the ethylene-vinyl acetate resin is for example 10 to 30 wt %, preferably 11 to 25 wt %, and more preferably 12 to 20 wt %. An excessively low vinyl acetate content may lead to deterioration in adhesiveness and easier dislocation of the tape when wound around bobbin, while an excessively high content may lead to excessive increase in adhesiveness and cause troubles in tape unwinding.

The peel strength of the release face of the release liner can be adjusted for example according to the kind of the resin constituting the release layer. Especially when the release layer is made of an ethylene copolymer such as ethylene-vinyl acetate resin, it can be adjusted for example according to the kinds and contents of the comonomers. Alternatively, the peel strength may be adjusted by addition of a suitable additive to the release layer.

When the release liner is a laminated film of a substrate (substrate for release liner) and a release layer, examples of the substrates for use include, but are not particularly limited to, plastic-based substrate films (synthetic resin films) such as polyester films (polyethylene terephthalate film, and the like), olefinic resin films (polyethylene film, polypropylene film, and the like), polyvinyl chloride films, polyimide films, polyamide films, and rayon films; papers (woodfree paper, Japanese paper, kraft paper, glassine paper, synthetic paper, topcoat paper, and the like), the laminated films thereof, and the like. Among them, olefinic resin films, in particular polyethylene films such as low-density polyethylene film, are preferable.

The second release liner according to the present invention is a single-layer or laminated film having a release layer of an ethylene-vinyl acetate resin. Similarly to above, the vinyl acetate content in the ethylene-vinyl acetate resin is for example 10 to 30 wt %, preferably 11 to 25 wt %, and more preferably 12 to 20 wt %. The release liner may contain, as needed, components other than the ethylene-vinyl acetate resin (other resins, additives, and the like) in small amounts. The content of the ethylene-vinyl acetate resin in the release layer of ethylene-vinyl acetate resin is for example 70 wt % or more, preferably 90 wt % or more, and more preferably 95 wt % or more. The release layer may be made substantially only of an ethylene-vinyl acetate resin.

Similarly to the first release liner, the second release liner may be a laminated film of a substrate and a release layer. In addition, the second release liner preferably has the peel strengths described above (peel strengths to acrylic plate and its rear face).

The thickness of the release liner (release liner A) according to the present invention may be selected properly, by taking winding processability and operability of the pressure-sensitive adhesive tape, separation processability of the release liner during use of the pressure-sensitive adhesive tape, and others, into consideration. The thickness of the release liner is generally approximately 10 to 300 $\mu$m, preferably 20 to 150 $\mu$m, more preferably 30 to 100 $\mu$m. When the release liner is made of a substrate (substrate for release liner) and a release layer, the thickness of the substrate is for example 5 to 200 $\mu$m, preferably 10 to 100 $\mu$m and more preferably 15 to 70 $\mu$m, while the thickness of the release layer is for example 5 to 150$\mu$m, preferably 8 to 80 $\mu$m and more preferably 10 to 60 $\mu$m. An excessively small release layer thickness may lead to easier fluctuation of the peeling power, while an excessively large thickness may lead to troubles in processability

The release liner according to the present invention can be prepared by any one of known film-forming methods and film-laminating methods such as extrusion, coextrusion, dry lamination and coating. If the release liner is a laminated film of a substrate and a release layer, coextrusion is preferable in which the substrate-constituting resin and the release layer-constituting resin are coextruded to produce the release liner.

[Pressure-sensitive adhesive tape]

The pressure-sensitive adhesive tape according to the present invention has the release liner according to the present invention (release liner A) temporarily bonded to one face of the pressure-sensitive adhesive layer.

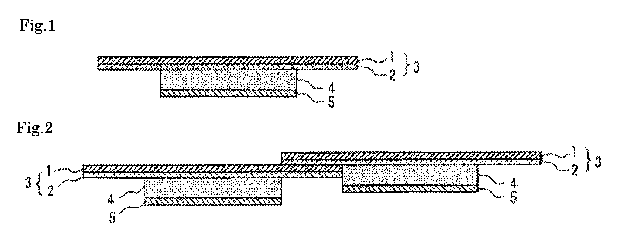

Figure 1 is a schematic crosssectional view illustrating an example of the pressure-sensitive adhesive tape according to the present invention.
The pressure-sensitive adhesive tape has a pressure-sensitive adhesive layer 4, a release liner 3 that is wider than the pressure-sensitive adhesive layer 4 and temporarily bonded to one face of the pressure-sensitive adhesive layer 4, and a release liner 5 that has a width identical with that of the pressure-sensitive adhesive layer 4 and temporarily bonded to the other face of the pressure-sensitive adhesive layer 4. The release liner 3, which is a laminated film consists of a substrate 1 and a release layer 2, is temporarily bonded to the pressure-sensitive adhesive layer 4 on its release layer 2-sided face.

In this example, the release liner according to the present invention (release liner A) is used as the release liner 3. In this way, as will be described below, the release liner 3 is not easily separated during winding of the pressure-sensitive adhesive tape around bobbin, and the release face of the release liner 3 in the region extending out of the pressure-sensitive adhesive layer 4 adheres preferably to the rear face of the release liner of neighboring pressure-sensitive adhesive tape, preventing or inhibiting crosswise dislocation of the wound tape and incorporation of bubbles between tapes. In addition, the adhesiveness of the release face of the release liner is so small that the liner can be separated easily from the pressure-sensitive adhesive layer during use of the pressure-sensitive adhesive tape.

The release liner 3 may not be wider than the pressure-sensitive adhesive layer 4 (may be identical in width with the pressure-sensitive adhesive layer 4). However, when the pressure-sensitive adhesive tape is wound in bobbin winding, as shown in the example of Figure 1, the width of the release liner 3 is preferably larger than that of the pressure-sensitive adhesive layer 4 since the lateral area of the pressure-sensitive adhesive layer of a pressure-sensitive adhesive tape often adheres to the lateral area of the pressure-sensitive adhesive layer of neighboring pressure-sensitive adhesive tape (blocking). The width of the release liner is preferably about 1.1 to 3 times, more preferably 1.2 to 2.5 times, larger than that of the pressure-sensitive adhesive layer 4. The pressure-sensitive adhesive layer 4 is normally placed on the release liner 3 with margins in the terminal regions of the release liner 3 in the width direction.

Though the pressure-sensitive adhesive layer 4 is not limited, in the present invention, it is profitable when used in the pressure-sensitive adhesive tape distributed as a pressure-sensitive adhesive tape roll bobbin winding having a thick pressure-sensitive adhesive layer, in particular a pressure-sensitive adhesive tape having a bubble-containing pressure-sensitive adhesive layer.

Rubber-based pressure-sensitive adhesives, acrylic pressure-sensitive adhesives, vinyl alkylether-based pressure-sensitive adhesives, silicone-based pressure-sensitive adhesives, polyester-based pressure-sensitive adhesives, polyamine-based pressure-sensitive adhesives, urethane-based pressure-sensitive adhesives, fluorine-based pressure-

**EP 2 039 506 A1**

sensitive adhesives, styrene-diene block copolymer-based pressure-sensitive adhesives, epoxy-based pressure-sensitive adhesives and the like are used alone or in combination of two or more as the pressure-sensitive adhesive for the pressure-sensitive adhesive layer 4. Alternatively, a photohardening pressure-sensitive adhesive (UV-hardening pressure-sensitive adhesive and the like) may be used as the pressure-sensitive adhesive.

In the present invention, an acrylic pressure-sensitive adhesive is particularly preferable as the pressure-sensitive adhesive for the pressure-sensitive adhesive layer 4. Such an acrylic pressure-sensitive adhesive normally contains, as the base polymer, an acrylic polymer containing a (meth)acrylic ester as the principal monomer component such as alkyl (meth)acrylate ester and the like.

Examples of the alkyl (meth)acrylate esters include (meth)acrylic $C_{1-20}$ alkyl esters such as methyl (meth)acrylate, ethyl (meth)acrylate, propyl (meth)acrylate, isopropyl (meth)acrylate, butyl (meth)acrylate, isobutyl (meth)acrylate, s-butyl(meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tetradecyl (meth)acrylate [preferably (meth)acrylic $C_{2-14}$ alkyl esters, more preferably (meth)acrylic $C_{2-10}$ alkyl esters] and the like. Examples of the (meth) acrylic esters other than alkyl (meth)acrylate esters include alicyclic hydrocarbon group-containing (meth)acrylic esters such as cyclopentyl (meth)acrylate, cyclohexyl (meth)acrylate and isobornyl (meth)acrylate, and aromatic hydrocarbon group-containing (meth)acrylic esters such as phenyl (meth)acrylate, and the like.

These (meth)acrylic esters may be used alone or in combination of two or more. The content of the (meth)acrylic ester [in particular, alkyl (meth)acrylate ester] in the acrylic polymer is for example 60 wt % or more and preferably 80 wt % or more, with respect to the total amount of the monomer components used in preparation of the acrylic pressure-sensitive adhesive.

In preparation of the acrylic polymer, various copolymerizable monomers such as polar group-containing monomers and polyfunctional monomers may be used as the monomer components. Use of a copolymerizable monomer as monomer component is effective in improving the adhesive strength and the cohesive force of the pressure-sensitive adhesive. The copolymerizable monomers may be used alone or in combination of two or more.

Examples of the polar group-containing monomers include carboxyl group-containing monomers such as (meth)acrylic acid, itaconic acid, maleic acid, fumaric acid, crotonic acid and isocrotonic acid or the anhydrides thereof (e.g. maleic anhydride); hydroxyl group-containing monomer including hydroxyalkyl (meth)acrylates such as hydroxyethyl (meth)acrylate, hydroxypropyl (meth)acrylate and hydroxybutyl (meth)acrylate; amide group-containing monomers such as acrylamide, methacrylamide, N,N-dimethyl(meth)acrylamide, N-methylol (meth)acrylamide, N-methoxymethyl(meth)acrylamide, and N-butoxymethyl(meth)acrylamide; amino-group-containing monomers such as aminoethyl (meth)acrylate, dimethylaminoethyl (meth)acrylate and t-butylaminoethyl (meth)acrylate; glycidyl group-containing monomers such as glycidyl (meth)acrylate and methylglycidyl (meth)acrylate; cyano group-containing monomers such as acrylonitrile and methacrylonitrile; heterocyclic-containing vinyl monomers such as N-vinyl-2-pyrrolidone, (meth)acryloylmorpholine, N-vinylpyridine, N-vinylpiperidone, N-vinylpyrimidine, N-vinylpiperazine, N-vinylpyrazine, N-vinylpyrrole, N-vinylimidazole and N-vinyloxazole; and the like. The polar group-containing monomer is preferably a carboxyl group-containing monomer such as acrylic acid or the anhydride thereof.

The use amount of the polar group-containing monomer is 30 wt % or less (e.g., 1 to 30 wt %), preferably 3 to 20 wt %, with respect to total amount of the monomer components used in preparation of the acrylic pressure-sensitive adhesive (acrylic polymer). A polar group-containing monomer content of more than 30 wt % may lead to excessive increase in the cohesive force of the acrylic pressure-sensitive adhesive and thus, to deterioration in pressure sensitive adhesion of the pressure-sensitive adhesive. On the other hand, an excessively low polar group-containing monomeric amount may lead to deterioration in the cohesive force of the acrylic pressure-sensitive adhesive, prohibiting generation of high shearing force.

Examples of the polyfunctional monomers include hexanediol di(meth)acrylate, (poly)ethylene glycol di(meth)acrylate, (poly)propylene glycol di(meth)acrylate, neopentylglycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylolmethane tri(meth)acrylate, allyl (meth)acrylate, vinyl (meth)acrylate, divinylbenzene, epoxy acrylate, polyester acrylate, urethane acrylate, butyl di(meth)acrylate, hexyl di(meth)acrylate and the like.

The use amount of the polyfunctional monomer is 2 wt % or less (e.g. 0.01 to 2 wt %), preferably 0.02 to 1 wt %, with respect to the total amount of the monomer components used in preparation of the acrylic pressure-sensitive adhesive. A polyfunctional monomer content of more than 2 wt % may lead to excessive increase in the cohesive force of the acrylic pressure-sensitive adhesive and thus in deterioration in pressure-sensitive adhesion. On the other hand, an excessively low polyfunctional monomer content may lead to deterioration in the cohesive force of the acrylic pressure-sensitive adhesive.

The copolymerizable monomers other than the polar group-containing monomers and the polyfunctional monomers can also be used including for example vinyl esters such as vinyl acetate and vinyl propionate; aromatic vinyl compounds such as styrene and vinyltoluene; olefins or dienes such as ethylene, butadiene, isoprene, and isobutylene;

vinylethers such as vinyl alkylethers; vinyl chloride; alkoxyalkyl (meth)acrylate-based monomers such as methoxyethyl (meth)acrylate and ethoxyethyl (meth)acrylate; sulfonic acid group-containing monomers such as sodium vinylsulfonate; phosphate group-containing monomers such as 2-hydroxyethylacryloyl phosphate; imide group-containing monomers such as cyclohexylmaleimide and isopropylmaleimide; isocyanate group-containing monomer such as 2-methacryloyloxyethyl isocyanate; fluorine atom-containing (meth)acrylates; silicon atom-containing (meth)acrylates; and the like.

In preparation of the acrylic pressure-sensitive adhesive, a curing reaction under heat or by irradiation of active energy ray by using a polymerization initiator such as thermal polymerization initiator and photopolymerization initiator (photoinitiator) may be used. The acrylic pressure-sensitive adhesive composition may contain a polymerization initiator such as thermal polymerization initiator or photopolymerization initiator. For example in forming a bubble-containing pressure-sensitive adhesive layer, it is possible to easily form an bubble-containing pressure-sensitive adhesive layer in a structure containing bubbles stably by curing the pressure-sensitive adhesive composition under heat or by energy ray with bubbles mixed.

The polymerization initiator for use is preferably a photopolymerization initiator, because it advantageously shortens the polymerization period. The polymerization initiators may be used alone or in combination of two or more.

Examples of the photopolymerization initiators for use include, but are not limited to, benzoin ether-based photopolymerization initiators, acetophenone-based photopolymerization initiators, $\alpha$-ketol-based photopolymerization initiators, aromatic sulfonyl chloride-based photopolymerization initiators, photoactive oxime-based photopolymerization initiators, benzoin-based photopolymerization initiators, benzyl-based photopolymerization initiators, benzophenone-based photopolymerization initiators, ketal-based photopolymerization initiators, thioxanthone-based photopolymerization initiators and the like.

The use amount of the photopolymerization initiator is not particularly limited, but, for example, in the range of 0.01 to 5 wt parts (preferably 0.05 to 3 wt parts) with respect to 100 wt parts of all monomer components used in preparation of the acrylic pressure-sensitive adhesive.

It is important to irradiate an active energy ray to the acrylic pressure-sensitive adhesive composition for activation of the photopolymerization initiator. Examples of the active energy rays include ionizing radiation such as $\alpha$ ray, $\beta$ ray, $\gamma$ ray, neutron beam and electron beam, ultraviolet ray and the like, and in particular, ultraviolet ray is preferable. The irradiation energy, irradiation period, irradiation method and others of the active energy ray are not particularly limited, as long as the active energy ray induces reaction of the monomer components by activation of the photopolymerization initiator.

Examples of the thermal polymerization initiators include azo-based polymerization initiators, peroxide-based polymerization initiators, redox-based polymerization initiators and the like. The use amount of the thermal polymerization initiator is not particularly limited, as long as it is in the range allowing use of the thermal polymerization initiator.

The pressure-sensitive adhesive layer 4 can be prepared by a known or conventionall method. For example, a pressure-sensitive adhesive layer 4 may be formed on a release liner 3 and then a release liner 5 on the pressure-sensitive adhesive layer 4, or alternatively, a pressure-sensitive adhesive layer 4 may be formed on a release liner 5 and then a release liner 3 on the pressure-sensitive adhesive layer 4. In curing the pressure-sensitive adhesive layer 4, heat or active energy ray may be applied thereto for curing in a suitable step.

The pressure-sensitive adhesive layer 4 may be a bubble-containing pressure-sensitive adhesive layer. The pressure-sensitive adhesive tape having such a bubble-containing pressure-sensitive adhesive layer performs excellent adhesiveness to curved or irregular surface. The bubbles contained in the bubble-containing pressure-sensitive adhesive layer are preferably, primarily independent bubbles, but may contain both independent bubbles and open-cell bubbles.

Preferably, the bubble is normally spherical (in particular, fine spherical), but may be distortedly spherical. The average diameter of the bubbles is not particularly limited, but may be selected in, for example, the range of 1 to 1000 $\mu$m (preferably 10 to 500 $\mu$m, more preferably 30 to 300 $\mu$m).

The gas components contained in the bubbles (hereinafter, referred to also as "bubble-forming gas") include, but are not limited to, inert gases such as nitrogen, carbon dioxide and argon, and other components such as air, and the like. If the reaction, for example polymerization reaction, is carried out in the state where the bubble-forming gas is contained, the bubble-forming gas for use should be a gas not inhibiting the reaction. The bubble-forming gas is preferably nitrogen, as it is inert to the reaction and low cost.

The amount of the bubbles contained in the bubble-containing pressure-sensitive adhesive layer is not particularly limited and may be determined properly, for example according to the application of the bubble-containing pressure-sensitive adhesive tape, and, for example, 10% or more (preferably 11% or more, more preferably 12% or more) with respect to the total volume of the bubble-containing pressure-sensitive adhesive layer. The maximum bubble content in the bubble-containing pressure-sensitive adhesive layer is not particularly limited, but may be, for example, 50% (preferably 40%, more preferably 30%).

The way of generating the bubble in the bubble-containing pressure-sensitive adhesive layer is not particularly limited. The bubble-containing pressure-sensitive adhesive layer may be, for example, a bubble-containing pressure-sensitive adhesive layer prepared by using a pressure-sensitive adhesive composition previously mixed with a bubble-forming gas (hereinafter, referred to also as "bubble-containing pressure-sensitive adhesive composition") or a bubble-containing pressure-sensitive adhesive layer formed by using a pressure-sensitive adhesive composition containing a foaming agent. The amount of the bubbles in the bubble-containing pressure-sensitive adhesive composition is selected properly in the range corresponding to the desired volume of the bubbles in the bubble-containing pressure-sensitive adhesive layer.

The bubble-containing pressure-sensitive adhesive layer may contain a surfactant as an aid for mixing bubbles. The surfactants can be used including: fluorochemical surfactants, silicone-based surfactants, nonionic surfactants, ion-based surfactant and the like. Among them, fluorochemical surfactants are particularly preferable, since it shows excwllent bubble mixing efficiency and allows to prevent bubble coalescence.

The fluorochemical surfactant is preferably a fluorochemical surfactant containing a fluorine-based polymer having a weight-average molecular weight of 20,000 or more. The weight-average molecular weight of the fluorine-based polymer is preferably in the range of 20,000 to 100,000 (more preferably 22,000 to 80,000, particularly preferably 24,000 to 60,000). If the fluorine-based polymer has a weight-average molecular weight of less than 20,000, the bubble mixing efficiency and the stability of the mixed bubbles declines, leading to reduction in the amount of the bubbles able to be mixed. Even if bubbles are mixed, the bubbles often disappear due to coalescence after bubble mixing and before preparation of the bubble-containing pressure-sensitive adhesive layer. As a result, the amount of the bubbles in the bubble-containing pressure-sensitive adhesive layer declines and bubbles (pores) penetrating the bubble-containing pressure-sensitive adhesive layer are formed easily. The fluorine-based polymers may be used alone or in combination of two or more.

Such a fluorine-based polymer contains at least a monomer containing a fluorine atom-containing group (hereinafter, referred to also as "fluorine-based monomer") as the monomer component. The fluorine-based monomers may be used alone or in combination of two or more.

Typical examples of the fluorochemical surfactants include "EFTOP EF-352" (manufactured by JEMCO Inc.), "EFTOP EF-801" (manufactured by JEMCO Inc.), "Unidine TG-656" (manufactured by Daikin Industries Ltd.) and the like.

The use amount (solid matter) of the fluorochemical surfactant is not particularly limited, but may be selected in, for example, the range of 0.01 to 2 wt parts (preferably 0.03 to 1.5 wt parts, more preferably 0.05 to 1 wt parts) with respect to 100 wt parts of the all monomer components for forming the base polymer in the bubble-containing pressure-sensitive adhesive composition [in particular, all monomer components for forming an acrylic polymer containing a (meth) acrylic ester as the principal monomer component]. A fluorochemical surfactant content of less than 0.01 wt part with respect to 100 wt parts of the base polymer in the bubble-containing pressure-sensitive adhesive composition leads to deterioration in bubble mixing efficiency, making it difficult to mix a sufficient amount of bubbles into the bubble-containing pressure-sensitive adhesive composition, while a content of more than 2 wt parts lead to deterioration in adhesiveness.

The bubble-containing pressure-sensitive adhesive layer may contain a hollow microsphere. Use of the hollow microsphere leads to increase in shear pressure-sensitive adhesive strength of the bubble-containing pressure-sensitive adhesive layer and improvement in processability. The hollow microspheres may be used alone or in combination of two or more.

The particle diameter (average particle diameter) of the hollow microsphere is not particularly limited, but may be selected in, for example, the range of 1 to 500 $\mu$m (preferably 5 to 200 $\mu$m, more preferably 10 to 100 $\mu$m).

The hollow microsphere may be a hollow inorganic or organic microsphere. Specific examples of the hollow inorganic microspheres include hollow balloons of glass such as hollow glass balloon; hollow balloons of metal compounds such as hollow alumina balloon; hollow balloons of ceramics such as hollow ceramic balloon; and the like. Examples of the hollow organic microspheres include resinous hollow balloons such as hollow acrylic balloon and hollow vinylidene chloride balloon and the like.

The specific gravity of the hollow microsphere is not particularly limited, but, for example, in the range of 0.1 to 0.8 g/cm$^3$ (preferably 0.12 to 0.5 g/cm$^3$). If the specific gravity of a hollow microsphere is less than 0.1 g/cm$^3$, the hollow microsphere may float significantly when mixed into the pressure-sensitive adhesive for the bubble-containing pressure-sensitive adhesive layer, making it difficult to disperse the hollow microsphere uniformly, while hollow microspheres having a specific gravity of more than 0.8 g/cm$^3$ are expensive and raise the production cost.

Various surface treatments (e.g. surface tension-reducing treatments by using a silicone or fluorine compound) may be performed on the surface of the hollow microsphere.

The use amount of the hollow microsphere is not particularly limited, but maybe selected so as to be in, for example, the range of 10 to 50 vol %, preferably 15 to 40 vol %, with respect to the total volume of the bubble-containing pressure-sensitive adhesive layer. When the use amount of the hollow microsphere is less than 10 vol % with respect to the total volume of the bubble-containing pressure-sensitive adhesive layer, the advantageous effects by addition of the hollow microsphere decline, while a content of more than 50 vol % may lead to deterioration in adhesive strength of the bubble-containing pressure-sensitive adhesive layer.

The bubble-containing pressure-sensitive adhesive layer may contain suitable additives according to the application of the bubble-containing pressure-sensitive adhesive tape. Examples of such additives include crosslinking agents (e.g. polyisocyanate-based crosslinking agents, silicone-based crosslinking agents, epoxy-based crosslinking agents, alkylether-modified melamine-based crosslinking agents, and the like), tackifiers (e.g., resins semi-solid or liquid at room temperature such as rosin-derived resins, polyterpene resins, petroleum resins, and oil-soluble phenol resins), plasticizers, fillers, aging inhibitors, antioxidants, colorants (pigments, dyes, and the like) and the like. These additives may be added as needed, even when the pressure-sensitive adhesive layer 4 is a pressure-sensitive adhesive layer containing no bubble.

For example when a bubble-containing pressure-sensitive adhesive layer is formed by using a photopolymerization initiator, a pigment (coloring pigment) may be added in an amount uninhibiting the photo-polymerization reaction, for coloring the bubble-containing pressure-sensitive adhesive layer. If the desired color of the bubble-containing pressure-sensitive adhesive layer is black, carbon black may be used as the coloring pigment. From the viewpoint of color density and for prevention of inhibition on the photo-polymerization reaction, the use amount of the carbon black is selected preferably from, for example, the range of 0.15 wt part or less (e.g., 0.001 to 0.15 wt part), preferably 0.02 to 0.1 wt part with respect to 100 wt parts of all monomer components for preparation of the base polymer of the pressure-sensitive adhesive for the bubble-containing pressure-sensitive adhesive layer [in particular, all monomer components for an acrylic polymer containing a (meth)acrylic ester as the principal monomer component].

When the bubble-containing pressure-sensitive adhesive layer is formed using a pressure-sensitive adhesive composition containing a foaming agent, the foaming agent for use is not particularly limited and may be selected properly from known foaming agents. Examples of the foaming agents for use include thermal expansion microspheres and others.

When the bubble-containing pressure-sensitive adhesive layer is formed by using a bubble-containing pressure-sensitive adhesive composition, it is preferable to mix bubbles in the bubble-containing pressure-sensitive adhesive composition as the last component to be blended and in particular to raise the viscosity of the composition before bubble mixing (hereinafter, referred to also as "pressure-sensitive adhesive precursor") for stable generation and mixing of bubbles in the bubble-containing pressure-sensitive adhesive layer. The viscosity of the pressure-sensitive adhesive precursor is not particularly limited, as long as it is a viscosity allowing stabilized preservation of the mixed bubbles. For example, the viscosity, as determined by using a BH viscometer and under the condition with a No.5 rotor, a rotational frequency of 10 rpm, and measurement temperature of 30°C, is desirably 5 to 50 Pa·s (preferably 10 to 40 Pa·s). When the viscosity of the pressure-sensitive adhesive precursor (BH viscometer, No.5 rotor, 10 rpm, 30°C) is less than 5 Pa·s, the mixed bubbles may collapse and disappear rapidly due to coalescence because of excessively low viscosity, while a viscosity of more than 50 Pa·s may result in excessive increase in viscosity, making it difficult to form the bubble-containing pressure-sensitive adhesive layer.

The viscosity of the pressure-sensitive adhesive precursor can be adjusted, for example, by a method of blending various polymer components such as acrylic rubber, thickening additive and others or a method of polymerizing part of the monomer components of the base polymer for the pressure-sensitive adhesive [for example, monomer components such as (meth)acrylic esters for acrylic polymer]. Specifically, the pressure-sensitive adhesive precursor having a suitable viscosity allowing stable preservation of the bubbles can be produced, for example, by preparing a monomer mixture by blending monomer components of base polymer for pressure-sensitive adhesive and a polymerization initiator; preparing a composition (sirup) containing some monomer components polymerized in polymerization reaction of monomer mixture according to the kind of the polymerization initiator; and blending as needed a hollow microsphere, various additives, and the like into the sirup. It is possible to obtain a bubble-containing pressure-sensitive adhesive composition stably containing bubbles by mixing bubbles into the pressure-sensitive adhesive precursor. In preparation of the sirup, the hollow microsphere, the various additives, and the like may be blended previously as needed in the monomer mixture.

The bubble-mixing method is not particularly limited, and any known bubble-mixing method may be used. An example of the apparatus is an apparatus having a stator carrying many small gears on a disc having a through-hole at the center and a rotor facing the geared stator and carrying gears similar to those on the stator formed on a disc. It is possible to obtain a bubble-containing pressure-sensitive adhesive composition in which the bubble-forming gas is finely dispersed in the pressure-sensitive adhesive precursor, by supplying a pressure-sensitive adhesive precursor into the space between the gears of stator and the gears of rotor in the apparatus and supplying a gas component for bubble generation (bubble-forming gas) via a through-hole into the pressure-sensitive adhesive precursor, while the rotor is rotated at high speed.

For reduction or prevention of bubble coalescence, it is preferable to carry out the series of steps of from bubble mixing to formation of bubble-containing pressure-sensitive adhesive layer continuously in a single step. Specifically, the bubble-containing pressure-sensitive adhesive layer is preferably formed by preparing a bubble-containing pressure-sensitive adhesive composition by bubble mixing, as described above, and then, by a known method of forming a pressure-sensitive adhesive layer by using the bubble-containing pressure-sensitive adhesive composition. More specifically, the bubble-containing pressure-sensitive adhesive layer can be prepared, for example, by applying a bubble-containing pressure-sensitive adhesive composition on a particular face (for example, on the surface of release liner 3 or release liner 5 in the case of Figure 1) and drying and curing the resulting film as needed. In preparing the bubble-containing pressure-sensitive adhesive layer, as described above, the coated film is preferably cured under heat or by irradiation of an active energy ray. It is thus possible to form a bubble-containing pressure-sensitive adhesive layer suitably by using a bubble-containing pressure-sensitive adhesive composition containing a polymerization initiator such as thermal polymerization or photopolymerization initiator, coating the bubble-containing pressure-sensitive adhesive composition on a particular face, curing the composition under heat or by irradiation of active energy ray while it preserves the bubbles stably.

The bubble-containing pressure-sensitive adhesive layer may be single-layered or laminated in shape. The thickness of the bubble-containing pressure-sensitive adhesive layer is not particularly limited, and may be selected in, for example, the range of 100 to 5000 μm (preferably 150 to 3000 μm, more preferably 200 to 2000 μm). A bubble-containing pressure-sensitive adhesive layer having a thickness of less than 100 μm may lead to deterioration in cushioning property and also in adhesiveness to curved and irregular faces, while a thickness of more than 5000 μm makes it difficult to obtain a layer of uniform thickness. When the pressure-sensitive adhesive layer is a non-bubble-containing pressure-sensitive adhesive layer, the thickness of the pressure-sensitive adhesive layer is the same as above.

The expansion ratio (%) of the bubble-containing pressure-sensitive adhesive layer may be, for example, 10% or more (preferably 11% or more, more preferably 12% or more). The maximum expansion ratio is not particularly limited, and may be, for example, 50% or less (preferably 40% or less, more preferably 30% or less). The expansion ratio of the bubble-containing pressure-sensitive adhesive layer is determined according to the following Formula (1):

$$\text{Expansion ratio of bubble-containing pressure-sensitive adhesive layer (\%)} = (1\text{-}B/A)\times 100 \quad (1)$$

[in Formula (1), A represents the specific gravity of a pressure-sensitive adhesive layer (non-bubble-containing pressure-sensitive adhesive layer) containing no bubble obtained by curing a pressure-sensitive adhesive without bubbles; and B represents the specific gravity of a bubble-containing pressure-sensitive adhesive layer obtained by curing a pressure-sensitive adhesive containing bubbles. The compositions of the pressure-sensitive adhesives A and B are the same as each other, except for the presence or absence of bubbles.]

A common release liner may be used as the release liner 5 (release liner B) temporarily bonded to the other face of the pressure-sensitive adhesive layer 4 shown in Figure 1. Examples of the release liners include release liners carrying a release-finished layer at least on one face of a substrate for release liner, release liners of fluorine-based polymer film, release liners of nonpolar polymer film, and the like. The release liner may be a single-layer film or a laminated film.

Examples of the substrates for release liner include plastic substrate films (synthetic resin films) such as polyester film (e.g. polyethylene terephthalate film), olefinic resin film (e.g. polyethylene film or polypropylene film), polyvinyl chloride film, polyimide film, polyamide film, and rayon film; papers (woodfree paper, Japanese paper, kraft paper, glassine paper, synthetic paper, topcoat paper, and the like), the laminated films thereof, and the like. Examples of release-finishing agents for the release-finished layer include silicone-based release-finishing agents, fluorine-based release-finishing agents, long-chain alkyl-based release-finishing agents and the like.

Examples of the fluorine-based polymers in the fluorine-based polymer film include polytetrafluoroethylene, polychloro-trifluoroethylene, polyvinyl fluoride, polyvinylidene fluoride, tetrafluoroethylene-hexafluoropropylene copolymers, chlorofluoroethylene-vinylidene fluoride copolymers, etc.) and the like. Examples of the nonpolar polymers in the nonpolar polymer film include olefinic resins such as polyethylene and polypropylene and the like.

The release liner 5 is preferably a release liner of a nonpolar polymer film such as olefinic resin, preferably a polyethylene film, and in particular a laminated polyethylene film in the layer structure for example of low-density polyethylene/high-density polyethylene/low-density polyethylene.

The thickness of the release liner 5 is not particularly limited, but, for example 3 to 500 μm, preferably 10 to 300 μm, and more preferably 50 to 200 μm.

The pressure-sensitive adhesive tape shown in Figure 1 is a substrateless two-sided pressure-sensitive adhesive tape having release liners on both faces with the layer structure of release liner A/pressure-sensitive adhesive layer/release liner B (double-separator-type substrateless two-sided pressure-sensitive adhesive tape). The layer structure is not limited thereto, and may be a substrateless two-sided pressure-sensitive adhesive tape having a release liner on one side with the layer structure of release liner A/pressure-sensitive adhesive layer (single-separator-type substrateless two-sided pressure-sensitive adhesive tape), a substrate-containing two-sided pressure-sensitive adhesive tape having release liners on both faces with the layer structure of release liner A/pressure-sensitive adhesive layer/substrate/pressure-sensitive adhesive layer/release liner B (double-separator-type substrate-containing two-sided pressure-sensitive adhesive tape), a substrate-containing two-sided pressure-sensitive adhesive tape having a release liner on one side with the layer structure of release liner A/pressure-sensitive adhesive layer/substrate/pressure-sensitive adhesive layer (single-separator-type substrate-containing two-sided pressure-sensitive adhesive tape), a substrate-containing single-sided pressure-sensitive adhesive tape having a release liner in the layer structure of release liner A/pressure-sensitive adhesive layer/substrate, or the like.

The substrate in the substrate-containing double-sided or single-sided pressure-sensitive adhesive tape is suitable thin material but not particularly limited. Examples thereof include paper-based substrates such as paper; fiber-based substrates such as woven fabric, nonwoven fabric, and net (the raw material thereof is not particularly limited, and preferable examples thereof include manila hemp, rayon, polyester, pulp fiber and the like); metal-based substrates such as metal foil and metal plate; plastic-based substrates such as plastic film and sheet; rubber-based substrates such as rubber sheet; foams such as foamed sheet; laminated films thereof (e.g. laminated films of a plastic-based substrate and other substrates, laminated films of plastic films (or sheets)), and the like. The substrate for use is preferably a plastic-based substrate such as plastic film or sheet. Examples of the raw materials for such a plastic film or sheet include olefinic resins having $\alpha$-olefin as principal monomer components such as polyethylene (PE), polypropylene (PP), ethylene-propylene copolymers, and ethylene-vinyl acetate copolymers (EVA); polyester resins such as polyethylene terephthalate (PET), polyethylene naphthalate (PEN) and polybutylene terephthalate (PBT); polyvinyl chloride (PVC); vinyl acetate resins; polyphenylene sulfide (PPS); amide resins such as polyamides (nylon) and fully aromatic polyamides (aramides); polyimide resins; polyether ether ketone (PEEK) and the like. These raw materials may be used alone or in combination of two or more.

For improvement in adhesiveness for example to the pressure-sensitive adhesive layer, the surface of the substrate may be subjected to common surface treatment, for example, chemical or physical oxidation treatment such as corona treatment, chromic acid treatment, ozone exposure, flame exposure, high-pressure electric shock exposure, or ionizing radiation treatment. The surface of the substrate may also be coated for example with an undercoat agent.

The thickness of the substrate vary according to the desired strength, flexibility, and application thereof, and is generally 1000 $\mu$m or less (e.g., 1 to 1000 $\mu$m), preferably 1 to 500 $\mu$m, more preferably 3 to 300 $\mu$m, but not limited thereto. The substrate may be in any shape, such as single-layered or laminated.

The pressure-sensitive adhesive tape according to the present invention may have other layers (e.g. intermediate layer, undercoat layer, and the like) in the range that does not impair the advantageous effects of the invention.

The width of the pressure-sensitive adhesive tape may be selected in wide range according to its application, but generally, the width of the pressure-sensitive adhesive layer is 2 mm to 100 mm, preferably 3 mm to 50 mm, and more preferably 5 mm to 30 mm.

The pressure-sensitive adhesive tape is often distributed to the market in the shape of roll, as it is wound around bobbin, as a so-called bobbin winding or record-disc winding, for convenience in storage, transportation and handling. The present invention is particularly advantageous when the pressure-sensitive adhesive tape is in shape of bobbin winding pressure-sensitive adhesive tape roll.

The pressure-sensitive adhesive tape according to the present invention can be used, for example, in applications for fixation of rubber extrusion moldings and as sealing materials for automobiles or building glasses.


[Pressure-sensitive adhesive tape roll]


The pressure-sensitive adhesive tape roll according to the present invention is a roll prepared by winding the pressure-sensitive adhesive tape according to the present invention in bobbin winding with release liner A inside.

The raw material for the bobbin is not particularly limited, and those commonly used can be used. Preferable examples of the bobbin raw materials include, but are not limited to, plastic resins such as polyolefin resins and polyvinyl chloride such as polyethylene, polypropylene, ethylene-propylene copolymers, polyethylene and polypropylene mixtures ethylene-vinyl acetate copolymers, and the like.

The pressure-sensitive adhesive tape roll with bobbin winding is normally produced by slitting a large-width original pressure-sensitive adhesive tape into multiple small-width tapes (at a desired width) and winding the slit tape around a bobbin as it is traversed. Figure 2 is a schematic view illustrating the bobbin winding state of the pressure-sensitive adhesive tape in the pressure-sensitive adhesive tape roll according to the present invention. The numerals therein are the same as those in Figure 1.

As shown in Figure 2, in pressure-sensitive adhesive tape rolls with bobbin winding, neighboring pressure-sensitive adhesive tapes are piled on one another, with the rear face of the release liner 3 (release liner A) of one pressure-sensitive adhesive tape (substrate 1 surface in Figure 2) in contact with the release face of the release liner 3 (release liner A) of the other pressure-sensitive adhesive tape (release layer 2 surface in Figure 2). In the present invention, because the release face of the release liner 3 is weakly adhesive (weakly pressure-sensitive adhesive), the rear face of the release liner 3 and the release face of the release liner 3 of the neighboring pressure-sensitive adhesive tape are bonded to each other by weak interaction, and the overlapping pressure-sensitive adhesive tapes are adhered in the region of the release liner 3. Thereby, it is possible to prevent dislocation of the pressure-sensitive adhesive tape and incorporation of air into the space between the release liners of the pressure-sensitive adhesive tape, and consequently to allow preservation of the desired winding shape and favorable appearance. A release liner 5 (release liner B) is laminated on the face of the pressure-sensitive adhesive layer 4 opposite to the release liner 3, and is preventing direct contact and adhesion of the pressure-sensitive adhesive layer 4 of the pressure-sensitive adhesive tape to the rear face of the release liner 3 of the previously wound pressure-sensitive adhesive tape right below. Since the width of the release liner 3 (release liner A) is larger than that of the pressure-sensitive adhesive layer 4, self adhesion between the lateral areas of the pressure-sensitive adhesive layers of the neighboring pressure-sensitive adhesive tapes can be prevented. In addition, since the adhesive strength of the release face of the release liner 3 is very small, it is possible to unwind the pressure-sensitive adhesive tape smoothly and separate the release liner easily from the pressure-sensitive adhesive tape during use.

EXAMPLES

Hereinafter, the present invention will be described in detail with reference to examples, but it should be understood that the present invention is not restricted at all by these Examples.

Example 1

To a monomer mixture of 90 wt parts of 2-ethylhexyl acrylate and 10 wt parts of acrylic acid, 0.05 wt part of trade name "Irgacure-651" (manufactured by Ciba Specialty Chemicals) and 0.05 wt parts of trade name "Irgacure-184" (manufactured by Ciba Specialty Chemicals) were added as photopolymerization initiators; and the mixture was irradiated with ultraviolet ray (UV) until the viscosity (BH viscometer, No.5 rotor, 10 rpm, measured at 30°C) of the mixture reached approximately 15 Pa·s, to produce a partially polymerized composition (sirup). Then, trade name "Unidine TG-656" (manufactured by Daikin Industries Ltd.; fluorochemical surfactant; weight-average molecular weight of fluorine-based polymer: 45,900) was added as surfactant in an amount as solid matter of 0.5 wt part with respect to 100 wt parts of the total monomer components (2-ethylhexyl acrylate and acrylic acid); and the mixture was agitated, to prepare a pressure-sensitive adhesive precursor. The pressure-sensitive adhesive precursor was placed in a container; nitrogen gas was supplied into the pressure-sensitive adhesive precursor by bubbling, and the bubbles generated were incorporated into the mixture using a homomixer, to give a bubble-containing pressure-sensitive adhesive composition.

A release liner A1 having a total thickness of 60 $\mu$m with the layer structure of substrate (LDPE-1; thickness 36 $\mu$m)/release layer (EVA; thickness: 24 $\mu$m) was prepared by coextrusion of a low-density polyethylene (LDPE-1; trade name " Novatec LD LF441MD", manufactured by Japan Polyethylene Corp.) and an ethylene-vinyl acetate copolymer (EVA; trade name, "Ultracene 626", manufactured by Toso Corporation, vinyl acetate content: 14 wt %). The peel strength (23°C) of the release layer face of the release liner A1 to acrylic plate was 0.05 N/20 mm, and the peel strength to acrylic plate, as determined after storage at 50°C for 24 hours, was 0.20 N/20 mm. The peel strength (23°C) of the release layer face of the release liner A 1 to its rear face (substrate surface) was 0.04 N/20 mm, and the peel strength to its rear face (substrate surface), as determined after storage at 50°C for 24 hours, was 0.20 N/20 mm.

A release liner B 1 having a total thickness of 150 $\mu$m with the layer structure of LDPE-2 (thickness 30 $\mu$m)/ HDPE (thickness 90 $\mu$m)/LDPE-3 (thickness 30 $\mu$m) was prepared by coextrusion of a low-density polyethylene (LDPE-2; trade name "Petrocene 186", manufactured by Toso Corporation), a high-density polyethylene (HDPE; trade name "Hi-ZEX 5000SF", manufactured by Prime Polymer), and a low-density polyethylene (LDPE-3; trade name "Petrocene 203", manufactured by Toso Corporation).

The bubble-containing pressure-sensitive adhesive composition was coated on the release layer face of the release liner A1 in a streak shape having a width of 15 mm at an interval of 15 mm so as to make a dried and cured thickness 1.0 mm; the release liner B1 (cut to a width of 15 mm, thickness: 150 $\mu$m) was bonded to the coated pressure-sensitive adhesive composition layer with the LDPE-2 layer in contact with the pressure-sensitive adhesive layer; and the laminate was irradiated with ultraviolet ray (UV) at an intensity of approximately 4.0 m W/cm$^2$ for 10 minutes for curing the bubble-containing pressure-sensitive adhesive composition, to give a large-width original pressure-sensitive adhesive tape having multiple streaky bubble-containing pressure-sensitive adhesive layers with width of 15 mm.

The original large-width pressure-sensitive adhesive tape was slit parallel to the streaky bubble-containing pressure-sensitive adhesive layer in the central area of the bubble-containing pressure-sensitive adhesive layer-unformed region, and each slit pressure-sensitive adhesive tape (width of pressure-sensitive adhesive layer: 15 mm, width of release liner A1: 30 mm) was wound around a bobbin (material: paper, diameter: 155 mm, length: 600 mm) as it is traversed into a spiral shape (wound length: 700 m), to obtain a bobbin-winding pressure-sensitive adhesive tape roll. Visual observation of the bobbin-winding pressure-sensitive adhesive tape roll obtained showed that there was no dislocation of the pressure-sensitive adhesive tape, that the tape was wound tightly and uniformly, that there was no bubbles incorporated into the space between pressure-sensitive adhesive tapes, and that the tape was favorable in appearance.

Comparative Example 1

A release liner a1 having a total thickness of 60 $\mu$m was prepared by extrusion of trade name "Novatec LD LF441MD" manufactured by Japan Polyethylene Corp. The peel strength (23°C) of the release face of the release liner a1 to acrylic plate was 0 N/20 mm, and the peel strength to acrylic plate, as determined after storage at 50°C for 24 hours, was 0 N/20 mm. The peel strength (23°C) of the release face of the release liner a1 to its rear face was 0 N/20 mm, and the peel strength to its rear face, as determined after storage at 50°C for 24 hours, was 0 N/20 mm.

A bubble-containing pressure-sensitive adhesive composition prepared in a similar manner to Example 1 was coated on the release face of the release liner a1 in a streaky shape having a width of 15 mm and an interval of 15 mm so as to make a dried and cured thickness 1.0 mm; the release liner B 1 was bonded to the coated pressure-sensitive adhesive composition layer in a similar manner to Example 1; and the laminate was irradiated with ultraviolet ray (UV) at an intensity of approximately 4.0 mW/cm$^2$ for 10 minutes for curing the bubble-containing pressure-sensitive adhesive composition, to give a large-width original pressure-sensitive adhesive tape having multiple streaky bubble-containing pressure-sensitive adhesive layers with a width of 15 mm.

The original large-width pressure-sensitive adhesive tape was slit parallel to the streaky bubble-containing pressure-sensitive adhesive layer in the central area of the bubble-containing pressure-sensitive adhesive layer-unformed region, and each slit pressure-sensitive adhesive tape (width of pressure-sensitive adhesive layer: 15 mm, width of release liner A1: 30 mm) was wound around a bobbin (material: paper, diameter: 155 mm, length: 600 mm) as it is traversed, into a spiral shape (wound length: 700 m), to obtain a bobbin-winding pressure-sensitive adhesive tape roll. Visual observation of the bobbin-winding pressure-sensitive adhesive tape roll obtained showed that there was dislocation of wound pressure-sensitive adhesive tape, that there were bubbles between pressure-sensitive adhesive tapes, and that the tape was unfavorable in appearance.

Industrial Applicability

The present invention provides a pressure-sensitive adhesive tape roll favorable in appearance in which pressure-sensitive adhesive tapes are wound tightly and uniformly around bobbin (in the desired winding shape).

**Claims**

1. A release liner of single-layer or laminated film comprising a release layer having a peel strength to acrylic plate (23°C) of 0.02 N/20 mm to 0.5 N/20 mm.

2. A release liner of single-layer or laminate film comprising a release layer of an ethylene-vinyl acetate resin.

3. The release liner according to Claim 1 or 2, wherein the release liner is a laminated film comprising a substrate and a release layer.

4. A pressure-sensitive adhesive tape comprising the release liner according to any one of Claims 1 to 3 (release liner A) temporarily bonded to one face of its pressure-sensitive adhesive layer.

5. The pressure-sensitive adhesive tape according to Claim 4, wherein the pressure-sensitive adhesive layer is made of an acrylic pressure-sensitive adhesive.

6. The pressure-sensitive adhesive tape according to Claim 4 or 5, wherein the pressure-sensitive adhesive layer is a bubble-containing pressure-sensitive adhesive layer.

7. The pressure-sensitive adhesive tape according to any one of Claims 4 to 6, wherein the width of the release liner A is larger than that of the pressure-sensitive adhesive layer.

8. The pressure-sensitive adhesive tape according to any one of Claims 4 to 7, wherein a release liner (release liner B) is temporarily bonded to the other face of the pressure-sensitive adhesive layer.

9. A pressure-sensitive adhesive tape roll wherein the pressure-sensitive adhesive tape according to Claim 8 is wound around a bobbin with its release liner B facing inward.

Fig.1

Fig.2

EP 2 039 506 A1

# INTERNATIONAL SEARCH REPORT

International application No.

PCT/JP2007/063107

### A. CLASSIFICATION OF SUBJECT MATTER
*B32B27/00*(2006.01)i, *B32B27/28*(2006.01)i, *C09J5/08*(2006.01)i, *C09J7/00*(2006.01)i, *C09J7/02*(2006.01)i, *C09J133/00*(2006.01)i

According to International Patent Classification (IPC) or to both national classification and IPC

### B. FIELDS SEARCHED

Minimum documentation searched (classification system followed by classification symbols)
B32B1-00/43/00, C09J1/00-210/10

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 5-194919 A (Minnesota Mining and Manufacturing Co.),<br>03 August, 1993 (03.08.93),<br>Full text<br>& US 5178924 A | 1-5,8<br>1-9 |
| X<br>Y | JP 4-226184 A (Minnesota Mining and Manufacturing Co.),<br>14 August, 1992 (14.08.92),<br>Full text<br>& US 5167995 A | 1-5,8<br>1-9 |
| X<br>Y | JP 63-027538 A (Nitto Electric Industrial Co., Ltd.),<br>05 February, 1988 (05.02.88),<br>Full text<br>(Family: none) | 1-5<br>1-9 |

[X] Further documents are listed in the continuation of Box C.    [ ] See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

Date of the actual completion of the international search
21 September, 2007 (21.09.07)

Date of mailing of the international search report
02 October, 2007 (02.10.07)

Name and mailing address of the ISA/
Japanese Patent Office

Authorized officer

Facsimile No.

Telephone No.

Form PCT/ISA/210 (second sheet) (April 2005)

15

**INTERNATIONAL SEARCH REPORT**

International application No.

PCT/JP2007/063107

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 3-031383 A (Kabushiki Kaisha Rida),<br>12 February, 1991 (12.02.91),<br>Full text<br>(Family: none) | 1-5<br>1-9 |
| X<br>Y | JP 3-021687 A (Kabushiki Kaisha Rida),<br>30 January, 1991 (30.01.91),<br>Full text<br>(Family: none) | 1-5<br>1-9 |
| Y | Microfilm of the specification and drawings annexed to the request of Japanese Utility Model Application No. 199147/1988(Laid-open No. 199147/1988)<br>(Nitto Denko Corp.),<br>21 December, 1988 (21.12.88),<br>Full text<br>(Family: none) | 1-9 |
| Y | WO 1999/038928 A1 (Kabushiki Kaisha Tsujiden),<br>05 August, 1999 (05.08.99),<br>Full text<br>& EP 1041131 A1 | 1-9 |
| Y | JP 2003-327929 A (Sekisui Chemical Co., Ltd.),<br>19 November, 2003 (19.11.03),<br>Full text<br>(Family: none) | 6 |
| Y | JP 8-067861 A (Nichiban Co., Ltd.),<br>12 March, 1996 (12.03.96),<br>Full text<br>(Family: none) | 6 |

Form PCT/ISA/210 (continuation of second sheet) (April 2005)

**EP 2 039 506 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 63199147 A